# EUROPÄISCHE PATENTSCHRIFT

(11) **EP 0 853 495 B1**
(45) Veröffentlichungstag und Bekanntmachung des Hinweises auf die Patenterteilung: **29.11.2000**
(21) Anmeldenummer: 96934470.4
(22) Anmeldetag: 26.09.1996
(51) Int. Cl.: B01L 3/00

(54) **VERWENDUNG EINES GEFÄSSES FÜR FLÜSSIGKEITEN**
USE OF A CONTAINER FOR LIQUIDS
USAGE DE RECIPIENTS POUR LIQUIDES

(30) Priorität: 02.10.1995 DE 19536789
(43) Veröffentlichungstag der Anmeldung: 22.07.1998
(73) Patentinhaber: Roche Diagnostics GmbH, 68298 Mannheim (DE)
(72) Erfinder: TREIBER, Wolfgang, D-82362 Weilheim (DE); VOGT, Bernd, D-82327 Tutzing (DE); ZIELENSKI, Ralf, D-83673 Bichl (DE)
(86) Internationale Anmeldenummer: EP9604211
(87) Internationale Veröffentlichungsnummer: WO9712677

(56) Entgegenhaltungen:
- DE-A- 4 011 584
- DE-C- 3 838 278
- US-A- 5 102 631
- PATENT ABSTRACTS OF JAPAN vol. 013, no. 334 (M-855), 27.Juli 1989 & JP,A,01 111657 (FUJI PHOTO FILM CO LTD), 28.April 1989,

## Beschreibung

Die Erfindung betrifft eine Verwendung eines Gefäßes für Flüssigkeiten zur Verringerung des CO₂-Eintrages in die Flüssigkeit mit einem Behältnis zur Aufnahme von Flüssigkeit, das eine Entnahmeöffnung besitzt und mit einer Röhre, die sich ausgehend von der Entnahmeöffnung in das Innere des Behältnisses erstreckt, so daß sie in die Flüssigkeit eintaucht, wobei sich die Röhre innerhalb der Entnahmeöffnung befindet oder sich direkt an die Entnahmeöffnung anschließt.

Im Gebiet der chemischen Analyse liegt häufig die Situation vor, daß aus einem Gefäß in zeitlichen Abständen wiederholt eine Flüssigkeit, wie beispielsweise ein Reagenz entnommen werden muß. Die bei der Analyse verwendeten Flüssigkeiten werden mehr oder minder durch Luft und die darin enthaltenen Gase, wie beispielsweise Kohlendioxid, Sauerstoff und Ammoniak in Mitleidenschaft gezogen. Weiterhin tritt eine Verdunstung der Flüssigkeiten auf, die die Analysenergebnisse beeinträchtigen kann.

Im Stand der Technik sind Gefäße mit Klappdeckeln bekannt, die nach einer Entnahme von Fluid geschlossen werden können, um den Luftzutritt und auch die Verdunstung der Flüssigkeit zu begrenzen. Eine Verwendung von Verschlüssen, wie Klapp- oder Schraubdeckel besitzt jedoch den Nachteil, daß zusätzliche Handhabungsschritte für das Öffnen und das Wiederverschließen notwendig sind. In automatischen Analysegeräten, die dem Anwender eine Benutzung soweit als möglich erleichtern, müssen daher recht aufwendige mechanische Vorrichtungen installiert werden.

Eine weitere im Stand der Technik bekannte Möglichkeit, um eine Kontamination der Flüssigkeit durch Luftzutritt und auch eine Verdunstung zu vermeiden, besteht darin, die Öffnung der Gefäße mit einem Septum zu versehen, das bei Entnahmeschritten durchstochen wird. Eine solche Vorrichtung stellt jedoch relativ hohe Anforderungen an die mechanische Stabilität der Pipettiernadel. Weiterhin ist es äußerst schwierig in eine solche Anordnung eine Vorrichtung zur Detektion der Flüssigkeitsoberfläche zu integrieren, da die Pipettiernadel, die für gewöhnlich auch als Detektor verwendet wird, mit dem Septum in mechanischem und elektrischem Kontakt steht.

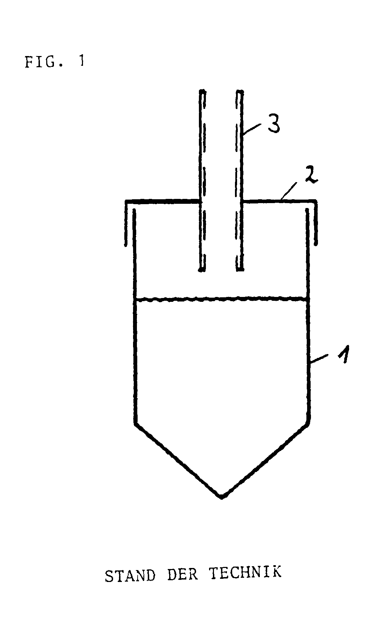

Im Stand der Technik ist weiterhin ein Aufsatz bekannt, der zur Begrenzung der Verdunstung aus einem Flüssigkeitsbehältnis dient (C.A. Butis und J.S. Watson in Clinical Chemistry 38/5, 768-775, 1992). Die Autoren beschreiben einen Aufsatz, der einen relativ schmalen Kamin besitzt und der somit eine Verdunstung wirksam begrenzt. Die Autoren beschreiben auch, daß der Kamin zum Teil in das Innere des Gefäßes hineinragen kann, um die durch den Kamin notwendig werdende Vergrößerung des Gefäßes zu begrenzen. In der Publikation wird darauf hingewiesen, daß das Gefäß in diesen Fällen nur halb bis dreiviertel gefüllt sein darf. In Figur 1 ist der Aufsatz zum Verdunstungsschutz des Standes der Technik dargestellt. Die vorgeschlagene Ausführungsform ist vor allem dadurch charakterisiert, daß der obere Teil des Kamins weit über das Gefäß hinausragt und der untere Teil des Kamins, der sich innerhalb des Gefäßes befindet, nicht in die Flüssigkeit eintaucht.

In der US 5,102,631 ist ein Gefäß mit einem Einsatz (evaporation chimney) beschrieben. Der Einsatz hat die Form einer Röhre, die in der Entnahmeöffnung des Behältnisses angeordnet ist, so daß ein Gasaustausch zwischen dem Gefäßinneren und dem Außenraum nur durch diese Röhre möglich ist. Die Röhre sitzt auf dem Gefäßboden auf und besitzt an ihrem unteren Ende Ausnehmungen, die ein Einströmen von Flüssigkeit aus dem Gefäß in die Röhre ermöglichen. Im oberen Bereich der Röhre innerhalb des Gefäßes besitzt die Röhre ebenfalls Ausnehmungen, die einen Druckausgleich zwischen dem Gasraum im Gefäß und dem Inneren der Röhre gestatten. Das US-Patent beschreibt die Verwendung der Röhre um die Verdunstung aus dem Gefäß zu verringern.

Aufgabe der vorliegenden Erfindung war es, eine Verwendung für Gefäße für Flüssigkeiten zu entwickeln, die einen Luftzutritt begrenzen und die in ihrer äußeren Form mit gebräuchlichen Gefäßen identisch sind. Insbesondere sollen die neuen Gefäße gegenüber den bereits in Verwendung befindlichen keinen zusätzlichen Platzbedarf aufweisen. Ebenfalls war es Aufgabe der Erfindung Gefäße vorzuschlagen, die eine längere Haltbarkeit der Flüssigkeiten ermöglichen, ohne den Zugriff auf die Flüssigkeiten zu erschweren.

Erfindungsgemäß wurde eine Verwendung für ein Gefäß für Flüssigkeiten gefunden, bei dem der CO₂-Eintrag in die Flüssigkeit verringert wird, wobei das Gefäß ein Behältnis zur Aufnahme von Flüssigkeit mit einer Entnahmeöffnung sowie eine Röhre besitzt, die sich ausgehend von der Entnahmeöffnung in das Innere des Behältnisses erstreckt, so daß sie in die Flüssigkeit eintaucht, wobei sich die Röhre innerhalb der Entnahmeöffnung befindet oder sich direkt an die Entnahmeöffnung anschließt.

Insbesondere im Bereich der Analyse ist es notwendig, wiederholt aus ein und demselben Gefäß Flüssigkeitsportionen zu entnehmen, um diese in der Analyse einzusetzen. Eine Vielzahl der Flüssigkeiten ist jedoch, zumindest in geringem Maße, gegen die Umgebungsluft und die darin enthaltenen Gase empfindlich. Weiterhin kann aus geöffneten Gefäßen Flüssigkeit verdampfen, was analytische Fehler nach sich zieht.

Flüssigkeiten im Sinne der Erfindung sind insbesondere Analyseflüssigkeiten oder auch andersgeartete Flüssigkeiten, die zur besseren Entnahme über einen längeren Zeitraum in geöffneten Gefäßen aufbewahrt werden, wie dies beispielsweise bei Farben, Lacken, Treibstoffen und dergleichen der Fall ist. Im Bereich der klinischen Analytik werden in geöffneten Gefäßen insbesondere Reagenzien aufbewahrt, wobei der Begriff Reagenz auch Hilfsflüssigkeiten wie Puffer, Waschlösung und dergleichen umfassen soll.

Das Gefäß für Flüssigkeiten besitzt eine Behältnis zur Aufnahme der Flüssigkeit. Die Größe des Behältnisses richtet sich nach der aufzubewahrenden Flüssigkeitsmenge, wobei es ein Vorteil der Erfindung ist, daß das Totvolumen des Behältnisses aufgrund der erfindungsgemäßen Röhre nicht vergrößert werden muß, wie dies im Stand der Technik der Fall ist. Im Bereich der klinischen Analytik werden Reagenziengefäße mit einigen 10 bis zu einigen 100 ml eingesetzt. Die Behältnisse können aus einer Vielzahl von Materialien, wie beispielsweise Glas, Keramik oder Metallen gefertigt sein. Vorzugsweise werden als Material Kunststoffe wie z. B. Polyäthylen oder Polypropylen verwendet.

Zur Entnahme von Flüssigkeit besitzt das Behältnis eine Entnahmeöffnung an seiner Oberseite. In der Regel besitzt die Entnahmeöffnung einen kreisförmigen Querschnitt und mündet in einen Verschlußbereich, wie beispielsweise eine Verschraubung oder das Unterteil eines Klappdeckelverschlusses. Die Größe der Entnahmeöffnung wird zur Begrenzung des Luftzutrittes und auch der Verdunstung möglichst klein gewählt. In der Praxis kann der Querschnitt der Entnahmeöffnung nur mit hohem Aufwand unter 6 mm gedrückt werden, da kleinere Querschnitte einen sehr hohen Aufwand zur manuellen oder maschinellen Positionierung einer Entnahmevorrichtung, beispielsweise einer Pipette verursachen. In der Praxis übliche Querschnitte im Bereich der klinischen Analytik liegen daher zwischen 6 und 15 mm.

Für den Transport bzw. eine längere Phase in der keine Benutzung stattfindet, besitzt ein erfindungsgemäßes Gefäß vorzugsweise einen dicht schießenden Verschluß, wie z.B. eine Schraubkappe oder einen Klappdeckel.

Entscheidend zur Verringerung der Verdunstung bzw. Kontamination der Flüssigkeit bei geöffnetem Behältnis ist eine Röhre, die sich ausgehend von der Entnahmeöffnung in das Innere des Behältnisses erstreckt. Die Röhre kann beispielsweise in die Entnahmeöffnung gesteckt sein, so daß Außenwandung der Röhre und Innenwandung bzw. Rand der Entnahmeöffnung dicht aneinander anliegen. Die Röhre kann sich auch direkt an die Entnahmeöffnung anschließen. Beispielsweise kann die Röhre an eine Innenseite des Behältnisses angespritzt sein, so daß die Entnahmeöffnung in die Röhre mündet. Wesentlich für die Erfindung ist es, daß ein Stoffaustausch, d. h. sowohl Luftzutritt als auch Wasserdampfaustritt durch die Röhre erfolgt.

Durch die Röhre können auch Kriecheffekte von Reagenzien aus den geöffneten Flaschen wirksam verhindert werden, wie sie insbesondere bei Reagenzien mit hohem Salz- und Detergenzgehalt beobachtet werden.

Die Röhre kann aus den bereits für das Behältnis genannten Materialien gefertigt sein. Bevorzugt sind wiederum Kunststoffe, da diese leicht zu bearbeiten sind und auch in den meisten Fällen keine Beeinträchtigung der in ihnen enthaltenen Flüssigkeiten verursachen. Die Länge der Röhre wird so gewählt, daß sie sich bei gefülltem Behältnis in die Flüssigkeit erstreckt. Insbesondere ist es bevorzugt, wenn die Röhre faßt bis zum Boden des Gefäßes herabreicht. Abstände zwischen Röhrenunterkante und dem darunter liegenden Boden des Behältnisses kleiner als 1 cm sind bevorzugt. Günstig sind weiterhin Ausführungsformen, bei denen die Röhre zumindest teilweise den Boden des Gefäßes berührt oder sogar mit diesem verbunden ist. In diesen Fällen müssten jedoch eine oder mehrere Öffnungen in der Röhre vorgesehen werden, die sich in Nähe des Gefäßbodens befinden.

Je tiefer die Röhre auf den Boden herabgeführt werden kann, desto ausgeprägter sind die erfindungsgemäßen Vorteile. Es muß jedoch gewährleistet sein, daß die Röhre nicht vom Flascheninnenraum abgetrennt ist, damit Flüssigkeit vom Flascheninnenraum in die Röhre einströmen kann. Die erfindungsgemäße Röhre stellt sicher, daß ein Kontakt zwischen Umgebung und Flüssigkeitsoberfläche auf den Querschnitt der Röhre beschränkt wird, während bei der im Stand der Technik bekannten Anordnung mit einem Kamin die Umgebung nach wie vor mit der gesamten Flüssigkeitsoberfläche im Behältnis in Kontakt treten kann. Da bei der Entnahme von Flüssigkeit der Pegel im Behältnis abnimmt, ist es wichtig, daß die Röhre möglichst tief in das Gefäß herabgeführt wird, um über einen weiten Bereich von Füllständen eine Begrenzung der Austauschfläche zwischen Flüssigkeit und Umgebung zu gewährleisten.

Die Röhre sollte einen Innenquerschnitt aufweisen, der nicht kleiner ist als der um 20 % verringerte Innenquerschnitt der Entnahmeöffnung, da bei einem zu kleinen Innenquerschnitt der Röhre ein Zugriff auf die Flüssigkeit erschwert wird. Bevorzugte Innenquerschnitte der Röhre liegen zwischen 7 und 20 mm. Es ist auch günstig, wenn die Röhre über ihre Länge einen kostanten Innenquerschnitt aufweist, da so die Anforderungen an den Pipettor bezüglich der Positioniergenauigkeit für die relevanten Füllstände gleich bleiben.

Es hat sich weiterhin als vorteilhaft herausgestellt, wenn die Röhre in ihrer Mantelfläche mindestens eine Öffnung besitzt, die einen Druckausgleich zwischen dem Totraum oberhalb der Flüssigkeit und der Umgebung ermöglicht. Durch diese Vorkehrung wird erreicht, daß der Flüssigkeitspegel innerhalb der Röhre mit dem im übrigen Gefäß übereinstimmt. Da durch diese mindestens eine Öffnung natürlich ein Stoffaustauch mit der Umgebung stattfinden kann, sollte die Größe der Öffnung möglichst begrenzt werden. Es hat sich herausgestellt, daß bereits eine Öffnung mit einem Querschnitt von 1 mm ausreichend ist um den Pegelausgleich in angemessener Zeit zu ermöglichen.

Vorteilhaft ist weiterhin eine möglichst glatte Oberfläche der Röhre, um Reagenzhaftungen auf den Wandungen zu minimieren.

Bei einer besonders bevorzugten Ausführungsform des Gefäßes wird dieses durch das Einschieben einer Röhre in die Öffnung eines konventionellen Reagenzgefäßes hergestellt. Bei dieser Ausführungsform ist es insbesondere von Vorteil, wenn die Röhre an ihrem einen Ende einen Flansch besitzt, der ein Hindurchrutschen durch die Öffnung des Behältnisses verhindert. Es ist mit dieser Ausführungsform möglich, bereits vorhandene Gefäße durch Nachrüstung zu verbessern.

Für alle genannten Ausführungsformen ist es vorteilhaft, wenn die Röhre nicht oder zumindest nicht wesentlich über die Öffnung des Gefäßes bzw. den Verschlußbereich hinausgeht, damit die Platzanforderungen des Gefäßes im wesentlichen denen eines Gefäßes ohne Röhre entsprechen. Dies ist zum einen vorteilhaft, da der notwendige Platzbedarf nicht vergrößert wird. Entscheidend für den Bereich der klinischen Analytik ist jedoch vor allem, daß Analyseautomaten normalerweise auf einen bestimmten Gefäßtyp eingestellt sind, so daß eine Veränderung der Höhe des Gefäßes durch einen herausragenden Kamin eine Neuprogrammierung der automatisch arbeitenden Pipettiervorrichtung notwendig machen würde, oder sogar eine komplette Neukonstruktion des Analyseautomaten erforderlich machen würde. Es ist daher besonders vorteilhaft, wenn die bereits aus einem bestimmten Analyseautomaten gebräuchlichen Gefäße durch Einschieben einer Röhre verbessert werden können. Zur Erfindung gehört daher die Verwendung einer Röhre zum Einschieben in die Öffnung eines Gefäßes.

Weiterhin gehört ein Verfahren zur Analyse von Probeflüssigkeiten zur Erfindung, das eine Entnahme von Reagenzflüssigkeiten aus Reagenzgefäßen mit einem Pipettor beinhaltet. Bei diesem Verfahren besitzen die Reagenzgefäße eine Röhre, die sich ins Innere des Gefäßes erstreckt wobei sich die Röhre innerhalb der Entnahmeöffnung befindet oder sich direkt an die Entnahmeöffnung anschließt und der Innendurchmesser der Röhre größer als der Querschnitt der Pipettiernadel des Pipettors ist. Da sowohl die Entnahme von Reagenzflüssigkeit aus Reagenzgefäßen mit einem Pipettor, als auch der Pipettor selbst im Stand der Technik hinlänglich bekannt ist, wird an dieser Stelle auf nähere Ausführungen verzichtet. Bezüglich des bei diesem Verfahren verwendeten Reagenzgefäßes wird auf vorangehende Details dieser Beschreibung verwiesen.

Die Erfindung wird im Folgenden anhand von Figuren und Beispielen näher erläutert:
- Figur 1:: Vorrichtung aus dem Stand der Technik.
- Figur 2:: Erfindungsgemäßes Gefäß und seine Zusammensetzung aus Vorratsbehältnis und Röhre.
- Figur 3:: pH-Wert Abnahme einer Reagenzflüssigkeit zur Bestimmung von alkalischer Phosphatase in konventionellen Reagenzgefäßen und in den gleichen Gefäßen, die mit einer erfindungsgemäßen Röhre versehen wurden.

Figur 1 zeigt eine Vorrichtung aus dem Stand der Technik, die der Publikation Clinical Chemistry 38/5, Seiten 768-775 (1992) entnommen wurde. Innerhalb eines mit einer großen Öffnung versehenen Gefäßes (1) befindet sich eine Flüssigkeit, die gegen Verdunstung geschützt werden soll. Dies wird durch einen Aufsatz (2) erreicht, der einen Kamin (3) beinhaltet. Es ist aus der Figur zu erkennen, daß der Kamin nur teilweise in das Innere des Gefäßes (1) hineinragt. Insbesondere wird ein Kontakt zwischen Kamin und Flüssigkeit vermieden, so daß die Umgebungsluft über dem Kamin mit der gesamten Flüssigkeitsoberfläche in Kontakt steht. Der dargestellte Kamin (3) ragt weiterhin erheblich über die Oberkante des Gefäßes (1) hinaus, so daß der Aufsatz (2) mit dem Kamin die räumlichen Anforderungen gegenüber dem Gefäß allein stark vergrößert.

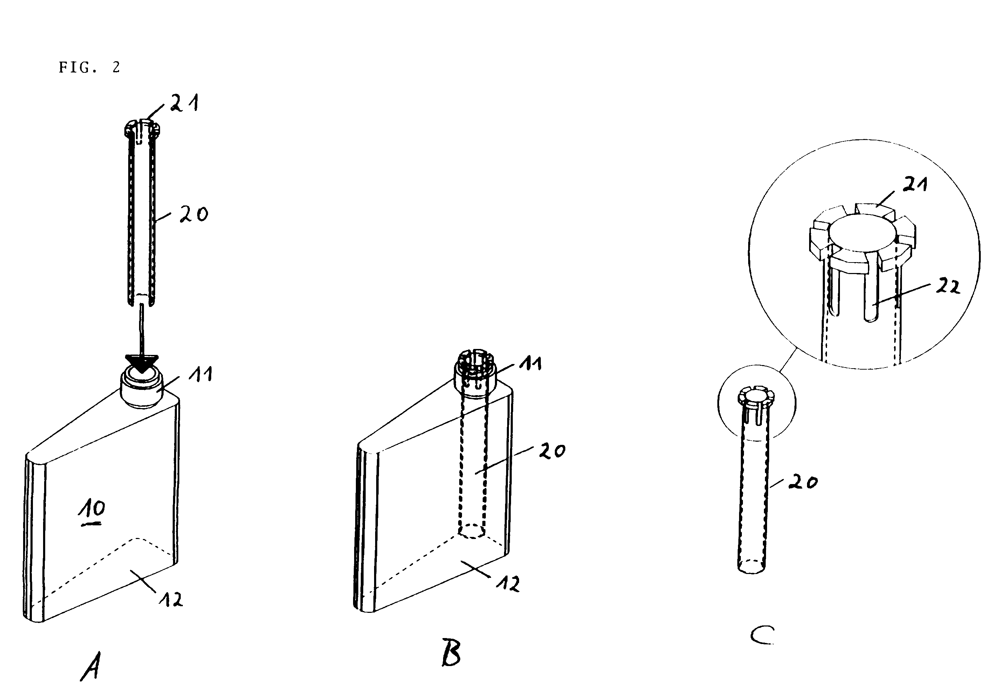

Figur 2a zeigt, wie ein Gefäß durch Zusammenstecken einer Röhre (20) und eines Behältnisses (10) hergestellt werden kann. Die Röhre (20) wird hierzu in den Verschlußbereich (11) des Behältnisses (10) eingesteckt. Ein Hindurchrutschen der Röhre (20) durch die Öffnung des Verschlußbereiches (11) wird durch ein Flansch (21) an einem Ende der Röhre verhindert.

Figur 2b zeigt die fertige Anordnung. Die Röhre (20) befindet sich so innerhalb des Verschlußbereiches (11), daß die Außenwandung der Röhre dichtend an der Innenwandung des Verschlußbereiches (11) anliegt. Die Röhre reicht bis auf einen Abstand von wenigen Millimetern bis auf den Boden (12) des Gefäßes hinab.

Figur 2c zeigt eine Detailvergrößerung des oberen Endes der Röhre (20). Der Flansch (21) besteht im dargestellten Beispiel aus einem Kreisring mit einigen Ausnehmungen. Zum Druckausgleich zwischen Umgebung und der im Gefäß befindlichen Flüssigkeit dienen eine Reihe von Schlitzen (22), die längs der Röhrenachse angeordnet sind. Durch diese Maßnahme kann gewährleistet werden, daß der Flüssigkeitsstand innerhalb der Röhre (20) mit dem im übrigen Gefäß übereinstimmt. Die Länge der Schlitze (22) ist so bemessen, daß sie kurz unterhalb des Bereiches enden, in dem die Röhre (20) und der Verschlußbereich (11) eng aneinander anliegen.

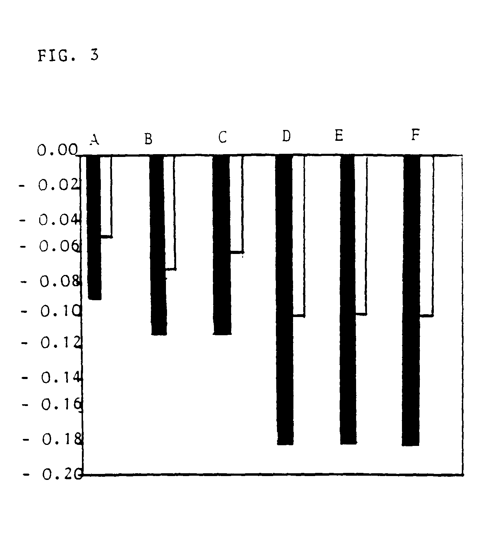

Figur 3 zeigt grafisch die pH-Wert Abnahme eines Reagenzgemisches zur Bestimmung von alkalischer Phosphatase über eine Dauer von 7 Tagen. Die in Figur 3 verwendeten Buchstaben kennzeichnen die folgenden Kombinationen von Flaschentypen und Füllhöhen:
- A:: 100 ml Flasche vollständig gefüllt
- B:: 100 ml Flasche zur Hälfte gefüllt
- C:: 50 ml Flasche vollständig gefüllt
- D:: 100 ml Flasche mit 20 ml gefüllt
- E:: 50 ml Flasche mit 20 ml gefüllt
- F:: 20 ml Flasche vollständig gefüllt

Die im Diagramm verwendeten Balken besitzen die folgende Bedeutung:
- Schwarz:: Gefäß ohne Kamin mit einer Entnahmeöffnung von 6 ml Durchmesser
- Weiß:: Gefäß mit erfindungsgemäßer Röhre von 5 cm Länge

Die Funktionsweise wird auch anhand der folgenden Beispiele verdeutlicht:

### Beispiel 1

Bedingt durch den alkalischen pH Wert ist die Methode zur Bestimmung alkalischer Phosphatase nach DGKCh hinsichtlich CO₂ Eintragung besonders anfällig. Dieses Reagenz, abgefüllt zu 50 ml in einer handelsüblichen 100 ml Systemflasche wurde jeweils mit und ohne Röhre gemäß Figur 2 in einem Boehringer Mannheim/Hitachi 717 Reagenzkompartiment bei 10°C stehen gelassen und die tägliche pH Wert Änderung verfolgt. Die beobachtete pH Abnahme ist in der folgenden Tabelle zusammengefaßt:

| | **Entwicklung des pH-Wertes** | |
|---|---|---|
| | **ohne Röhre** | **mit Röhre** |
| Ausgangswert | 10.38 | 10.38 |
| nach 7 Tagen auf dem Gerät (geöffnet) | 10.27 | 10.36 |

Durch die erfindungsgemäße Röhre wird die zeitliche Abnahme des pH Wertes stark reduziert. Da im vorliegenden Beispiel die pH-Wert Änderung die wesentliche Ursache für die Reagenzienstabilität ist, wird die Stabilität des Reagenzes entsprechend verbessert.

### Beispiel 2

Es wurde die Kalibrationsstabilität einiger Reagenzien am Boehringer Mannheim/Hitachi 717 Analysenautomaten in halbgefüllten, unverschlossenen 100 ml Reagenzflaschen untersucht. Kriterium für Kalibrationsstabilität war dabei eine erlaubte Abweichung der Wiederfindung bezogen auf die Ausgangskonzentration von maximal ± 5% für das eingesetzte Kalibrator- und Kontrollmaterial. Das Ergebnis ist in der folgenden Tabelle zusammengefaßt:

| **Testparameter** | **Kalibrationsstabilität (Tage)** | |
|---|---|---|
| | **ohne Röhre** | **mit Röhre** |
| ALP DGKCh | 3 | 9 |
| Calcium | 4.5 | 11.5 |
| Creatinin Jaffe | 22 | > 52 |
| LDH DGKCh | 16 | 45 |
| Magnesium | 17 | 26 |

Durch die erfindungsgemäße Röhre wird auch hier die Kalibrationsstabilität um einen Faktor 2-3 verbessert. Besonders stark ausgeprägt ist die Verbesserung bei wenig stabilen Reagenzien wie ALP-DGKCh. Hier erhöht sich die Kalibrationsstabilität von 3 auf 9 Tage.

### Beispiel 3

Ein Bicarbonatreagenz (Boehringer Mannheim Corporation, Indianapolis) in einer halbgefüllten 100 ml Flasche wurde jeweils mit und ohne Röhre entsprechend Figur 3 in das Reagenzkompartment eines Boehringer Mannheim/Hitachi 717 Analysenautomaten gestellt und die zeitliche Veränderung des Reagenzienwertes verfolgt. Das Ergebnis ist in der folgenden Tabelle zusammengefaßt:

| **Tage** | **Reagenzleerwert (mExtinktionen/min)** | |
|---|---|---|
| | **ohne Röhre** | **mit Röhre** |
| 0 | -3.0 | -4.5 |
| 2 | -3.8 | -4.4 |
| 3 | -4.4 | -4.1 |
| 7 | -5.7 | -4.3 |
| 9 | -6.2 | -4.9 |
| 14 | -7.9 | -4.6 |

Während ohne Röhre über 14 Tage eine kontinuierliche Zunahme des Reagenzleerwertes beobachtet wird, bleibt dieser in dem parallel durchgeführten Versuch mit Röhre über den gesamten Beobachtungszeitraum nahezu konstant.

### Beispiel 4 (nicht nach Anspruch 1)

Durch eine Röhre gemäß Figur 2 wird auch die Verdunstung signifikant reduziert: mit Wasser halbgefüllte 100 ml Reagenzflaschen wurden 14 Tage bei Raumtemperatur auf der Laborbank stehengelassen und der Flüssigkeitsverlust anschließend durch Wiegen bestimmt: ohne Röhre verdunsteten bei diesem Versuch 6.9%, mit erfindungsgemäßer Röhre lediglich 3.1% der Flüssigkeit.

### Beispiel 5 (nicht nach Anspruch 1)

Ein Eisenreagenz (Boehringer Mannheim), welches unter anderem eine 4molare Guanidiniumchloridlösung in Detergenz enthält, wird in einer unverschlossenen Polyethylenflasche auf die Laborbank gestellt. Binnen 48 Stunden kriecht das Reagenz aus der Öffnung. Bei einer gleichermaßen befüllten Flasche, welcher ein Kamin aus Teflon eingesetzt wurde, verbleibt das Reagenz innerhalb einer üblichen Verbrauchszeit von 28d in der Flasche.

### Bezugszeichenliste:

- 1: Gefäß für Flüssigkeiten
- 2: Aufsatz zum Verdunstungsschutz
- 3: Kamin
- 10: Behältnis
- 11: Verschlußbereich
- 12: Boden des Gefäßes
- 20: Röhre
- 21: Flansch
- 22: Schlitze

## Patentansprüche

1. Verwendung eines Gefäßes zur Verringerung des CO₂-Eintrages in Flüssigkeit mit
- einem Behältnis zur Aufnahme von Flüssigkeit, das eine Entnahmeöffnung besitzt und
- einer Röhre, die sich ausgehend von der Entnahmeöffnung in das Innere des Behältnisses erstreckt, so daß sie in die Flüssigkeit eintaucht, wobei sich die Röhre innerhalb der Entnahmeöffnung befindet oder sich direkt an die Entnahmeöffnung anschließt und die Röhre die Austauschfläche zwischen Flüssigkeit und Umgebung begrenzt.

2. Verwendung gemäß Anspruch 1, wobei die Röhre in ihrer Mantelfläche mindestens eine Öffnung besitzt, die einen Gasaustausch zwischen dem Totraum oberhalb der Flüssigkeit und der Umgebung ermöglicht.

3. Verwendung gemäß Anspruch 1, bei der der Innenquerschnitt der Röhre nicht kleiner ist als der um 20% verringerte Innenquerschnitt der Entnahmeöffnung.

4. Verwendung gemäß Anspruch 1, bei der die Länge der Röhre so bemessen ist, daß der Abstand zwischen Röhrenunterkante und dem darunter liegenden Boden des Behältnisses kleiner als 1 cm ist.

5. Verwendung gemäß Anspruch 1, bei der Gefäß und Röhre separate Einzelteile sind, die zusammengefügt werden.

6. Verwendung gemäß Anspruch 1, bei der der Innenquerschnitt der Röhre zwischen 7 und 20 mm liegt.

7. Verwendung gemäß Anspruch 1, bei der die Röhre an ihrem einen Ende einen Flansch besitzt, der ein Hindurchrutschen durch die Öffnung des Behältnisses verhindert.

8. Verwendung gemäß Anspruch 1, bei der die Röhre an ihrem einen Ende schlitzförmige Ausnehmungen besitzt, die in Richtung der Röhrenachse ausgerichtet sind.

9. Verwendung gemäß Anspruch 1, wobei das Gefäß einen Verschluß besitzt mit dem die Entnahmeöffnung verschlossen werden kann.

10. Verwendung gemäß Anspruch 1, wobei der Innenquerschnitt der Röhre über die Länge der Röhre im wesentlichen konstant ist.

## Claims

1. Use of a container to reduce intake of CO₂ into a liquid comprising
- a vessel for holding liquid having a withdrawal opening, and
- a tube that extends from the withdrawal opening into the interior of the vessel such that it dips into the liquid, the tube being located inside the withdrawal opening or directly adjoining the withdrawal opening and the tube limiting the area of exchange between the liquid and the environment.

2. Use as claimed in claim 1, wherein the wall of the tube has at least one opening that enables gas exchange between the dead space above the liquid and the environment.

3. Use as claimed in claim 1, wherein the internal diameter of the tube is not less than the internal diameter of the withdrawal opening which is decreased by 20 %.

4. Use as claimed in claim 1, wherein the length of the tube is designed such that the distance between the lower edge of the tube and the bottom of the vessel below it is less than 1 cm.

5. Use as claimed in claim 1, wherein the container and tube are separate components which are joined together.

6. Use as claimed in claim 1, wherein the internal diameter of the tube is between 7 and 20 mm.

7. Use as claimed in claim 1, wherein the tube has a flange at one end that prevents the tube from slipping through the opening of the vessel.

8. Use as claimed in claim 1, wherein the tube has slits at one end which are aligned with the tube axis.

9. Use as claimed in claim 1, wherein the container has a cap that can be used to close the withdrawal opening.

10. Use as claimed in claim 1, wherein the internal diameter of the tube is essentially constant over the length of the tube.

## Revendications

1. Utilisation d'un récipient pour réduire la charge de CO₂ dans un liquide, comprenant :
- un récipient destiné à recevoir un liquide et possédant une ouverture de retrait, et
- un tube qui s'étend de l'ouverture de retrait à l'intérieur du récipient, de manière à s'enfoncer dans le liquide, le tube se trouvant à l'intérieur de l'ouverture de retrait ou directement adjacent à l'ouverture de retrait, et le tube limitant la surface d'échange entre le liquide et l'environnement.

2. Utilisation selon la revendication 1, le tube étant pourvu, dans sa surface périphérique, d'au moins une ouverture permettant un échange gazeux entre l'espace mort au-dessus du liquide et l'environnement.

3. Utilisation selon la revendication 1, dans laquelle la section transversale interne du tube n'est pas inférieure à la section transversale interne de l'ouverture de retrait réduite de 20%.

4. Utilisation selon la revendication 1, dans laquelle la longueur du tube est dimensionnée de manière à ce que la distance entre le bord inférieur du tube et le fond du récipient situé au-dessous soit inférieure à 1 cm.

5. Utilisation selon la revendication 1, dans laquelle le récipient et le tube sont des parties individuelles séparées qui sont assemblées.

6. Utilisation selon la revendication 1, dans laquelle la section transversale interne du tube mesure entre 7 et 20 mm.

7. Utilisation selon la revendication 1, dans laquelle le tube est pourvu, à l'une de ses extrémités, d'une bride qui empêche qu'il ne glisse à travers l'ouverture du récipient.

8. Utilisation selon la revendication 1, dans laquelle le tube est pourvu, à l'une de ses extrémités, d'évidements en forme de fentes qui sont orientés dans la direction de l'axe du tube.

9. Utilisation selon la revendication 1, le récipient possédant une fermeture qui permet de fermer l'ouverture de retrait.

10. Utilisation selon la revendication 1, la section transversale interne du tube étant essentiellement constante sur toute la longueur du tube.
